Europäisches Patentamt

European Patent Office

Office européen des brevets

(11) Numéro de publication: **0 055 646**
**B1**

(12) **FASCICULE DE BREVET EUROPEEN**

(45) Date de publication du fascicule du brevet:
11.07.84

(51) Int. Cl.³: **G 11 B 7/08**, G 11 B 7/12

(21) Numéro de dépôt: **81401936.0**

(22) Date de dépôt: **04.12.81**

(54) **Dispositif optique d'accès à une piste sur un support d'information mobile.**

(30) Priorité: **29.12.80 FR 8027694**

(43) Date de publication de la demande:
**07.07.82 Bulletin 82/27**

(45) Mention de la délivrance du brevet:
**11.07.84 Bulletin 84/28**

(84) Etats contractants désignés:
**DE GB NL**

(56) Documents cités:
**EP - A - 0 012 603**
**DE - A - 2 805 458**
**FR - A - 2 294 605**
**FR - A - 2 349 911**
**US - A - 3 588 218**
**US - A - 3 992 593**

**PATENTS ABSTRACTS OF JAPAN, vol. 2, no. 121, 12
octobre 1978, page 7078E78**
**PATENTS ABSTRACTS OF JAPAN, vol. 2 no. 37,
13-03-1978, page 102E78**
**PATENTS ABSTRACTS OF JAPAN, vol. 4, no. 78, 6 juin
1980, page 26P14**

(73) Titulaire: **THOMSON-CSF, 173, Boulevard Haussmann,
F-75379 Paris Cedex 08 (FR)**

(72) Inventeur: **Volleau, Patrick, THOMSON-CSF
SCPI 173, bld Haussmann, F-75360 Paris Cedex 08 (FR)**
Inventeur: **Bricot, Claude, THOMSON-CSF SCPI 173, bld
Haussmann, F-75360 Paris Cedex 08 (FR)**
Inventeur: **Audouin, Michel, THOMSON-CSF
SCPI 173, bld Haussmann, F-75360 Paris Cedex 08 (FR)**
Inventeur: **Leterme, Dominique, THOMSON-CSF
SCPI 173, bld Haussmann, F-75360 Paris Cedex 08 (FR)**
Inventeur: **Le Merer, Jean-Pierre, THOMSON-CSF
SCPI 173, bld Haussmann, F-75360 Paris Cedex 08 (FR)**

(74) Mandataire: **Lepercque, Jean et al, THOMSON-CSF
SCPI 173, Bld Haussmann, F-75379 Paris Cedex 08 (FR)**

## Description

L'invention se rapporte à un dispositif optique d'anès à une piste sur un support d'information nobile destiné à enrayer le déséquilibre d'un miroir galvanométrique d'une tête optique pendant le déplacement de celle-ci.

L'invention concerne plus particulièrement les systèmes lecteurs et enregistreurs dans lequel le support d'information est un disque. Actuellement on peut enregistrer environ $10^{10}$ éléments binaires d'information sur un disque d'une trentaine de centimètres de diamètre. Ces systèmes peuvent être utilisés comme mémoire de masse pour des ensembles de traitement numérique de données. Ils permettent un accès aléatoire à une partie prédéterminée des données enregistrées, par exemple un bloc de mots binaires de longueur fixe ou variable. D'autre part la vitesse de calcul des unités de traitement de l'information nécessite de nombreux échanges entre les mémoires périphériques et ces unités de calcul. Il est donc nécessaire que l'accès à une piste prédéterminée d'un support d'informations mobile se fasse dans le temps le plus court possible; pour lire des informations préenregistrées ou pour enregistrer ces informations, quelque soit la position de cette piste sur le disque. Le temps moyen d'accès doit être inférieur à 100 millisecondes.

Les dispositifs d'accès à une piste actuellement réalisés sont essentiellement destinés à des disques sur lesquels l'information enregistrée contient un signal vidéo. Le temps d'accès à l'information est dans ces systèmes de l'ordre de quelques secondes, ce qui est suffisant pour cette application.

Dans les dispositifs d'accès antérieurement connus le positionnement radial correct d'une tête d'enregistrement et/ou lecture optique est réalisé par des moyens mécaniques assurant soit le déplacement de cette tête, soit le plus souvent le déplacement du disque. Lorsque la tête de lecture et le disque sont correctement positionnés l'un par rapport à l'autre, le suivi radial de la piste circulaire ou en hélice, sur laquelle doit être (ou est) enregistrée l'information, est réalisé à l'aide d'un miroir galvanométrique mobile autour d'un axe parallèle au plan du disque qui réfléchit un faisceau produit par au moins une source d'énergie lumineuse comprenant un laser. La tête comporte également un dispositif assurant l'asservissement vertical de l'objectif servant à l'enregistrement-lecture.

La demande de brevet EP-A-23 868, qui appartient à l'état de la technique selon l'article 5463, propose un dispositif d'accès à une piste sur un support d'information mobile, enregistrable ou lisible optiquement par un rayonnement focalisé. Dans ce dispositif la tête d'enregistrement-lecture est solidaire d'un équipage mobile. Une source d'énergie à laser fixe et des moyens optiques grossissant du type afocal assurent la liaison entre la source d'énergie et la tête d'enregistrement-lecture. Ce grossissement est alors suffisant pour que le faisceau émergeant de ces moyens optiques recouvrent en totalité la pupille d'entrée de l'objectif. La source d'énergie lumineuse fixe comprend au moins un élément rayonnant qui produit un faisceau de rayons parallèles centrés autour d'un axe.

Ce faisceau est capté par l'équipage mobile qui se déplace parallèlement à cet axe par rapport au support d'information. Cet équipage mobile comprend un miroir galvanométrique de renvoi et un objectif qui focalise le faisceau sur la piste prédéterminée du support. Ce miroir permet un asservissement radial de la tête optique.

Lors d'un déplacement rapide du chariot, ce miroir galvanométrique peut tourner autour de son axe de rotation; cette rotation étant dûe à la forte accélération subie du fait du déplacement rapide. Mais cette rotation perturbe le fonctionnement de l'asservissement radial. Le temps de positionnement de la tête optique s'en trouve augmenté d'autant.

Le but de l'invention est de pallier cet inconvénient en enrayant le déséquilibre de ce miroir galvanométrique pendant le déplacement rapide de la tête optique.

Le brevet EP-A-12 603 décrit un système comparable à ce dispositif de l'art antérieur. Il comprend des moyens photodétecteurs et des moyens d'asservissement permettant de réaliser le suivi par un spot d'une piste portée par le support. Il décrit donc un système d'asservissement du miroir de renvoi.

Mais la présente demande prévoie, en outre, des deuxièmes moyens photodétecteurs qui en combinaison avec les moyens d'asservissement permettent d'enrayer le déséquilibre du miroir de renvoi pendant un déplacement rapide.

Le brevet US-A-3 992 593 décrit un système utilisant deux paires de moyens photodétecteurs pour commander le suivi d'un spot lumineux; mais ce brevet résout un problème différent; en effet ce brevet décrit un système permettant de détecter l'amplitude et le taux de déplacement d'un signal laser après réflexion sur le sillon d'un disque en rotation.

Ainsi le dispositif de l'invention qui permet de pallier l'inconvénient du déséquilibre du miroir de renvoi dans une tête optique, qui se produit lors d'un déplacement rapide de cette tête, n'est pas décrit dans l'art antérieur.

L'invention a donc pour objet un dispositif d'accès à une piste sur un support d'information mobile, enregistrable ou lisible optiquement par un rayonnement focalisé, ledit dispositif comprenant: une source éclairant via un miroir de renvoi la pupille d'entrée d'un objectif projetant un spot lumineux d'éclairement dudit support, un moteur électrodynamique permettant de faire pivoter ledit miroir, des premiers moyens photodétecteurs fournissant un signal détecteur de l'écart de suivi du spot lumineux d'éclairement du support, des moyens d'asservissement ayant une entrée de commande recevant ledit signal détecteur de l'écart, afin de réaliser le suivi par ledit spot d'une piste portée par ledit support, caractérisé en ce que des deuxièmes moyens photodétecteurs en recueillant au retour la lumière réfléchie par un élément réfléchissant entourant ladite pupille de l'objectif, fournissent un signal indicateur du déséquilibre dudit miroir de renvoi pendant un déplacement dudit miroir et dudit objectif, et en ce que lesdits moyens d'asservissement ont une deuxième entrée de commande recevant ledit signal indicateur, afin d'enrayer ledit déséquilibre.

L'invention sera mieux comprise et d'autres caractéristiques apparaitront à l'aide de la description qui suit, en référence aux figures annexées parmi lesquelles:

— la figure 1 illustre le fonctionnement d'un dispositif de l'art connu;

— les figures 2, 3, 4 illustrent trois aspects du dispositif selon l'invention.

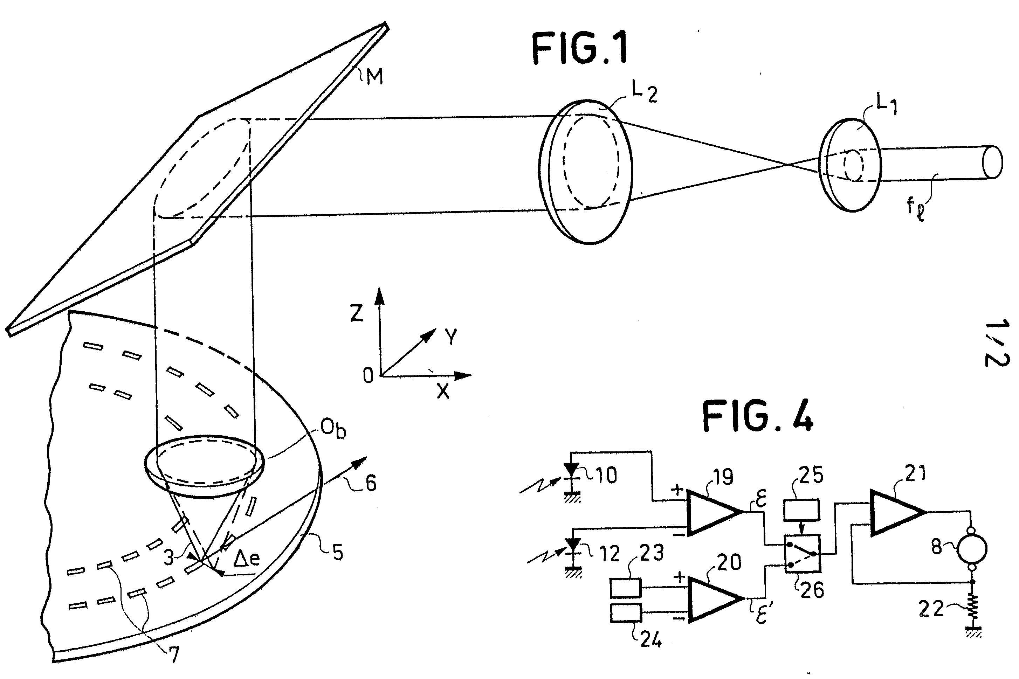

Le dispositif de la figure 1 permet l'accès à une des pistes d'un support d'information et notamment à une piste prédéterminée d'un disque, il est utile de rappeler les éléments constitutifs d'un système enregistreur et/ou lecteur d'un tel support. Plus particulièrement il concerne un système optique enregistreur-lecteur dont la tête de lecture est mobile parallèlement à un rayon du disque support d'information. On peut utiliser un tel disque soit pour inscrire des informations en un point déterminé d'une piste lisse inscrite au préalable, soit pour lire des informations inscrites en un point quelconque de cette piste. Le disque, d'un diamètre d'envrion 30 cm est animé d'un mouvement de rotation communiqué par un moteur d'entrainement solidaire du chassis du système optique d'enregistrement-lecture. Le dispositif d'accès a une piste prédéterminée du disque comprend une partie fixe constituée par les sources d'énergie lumineuse et une partie mobile constituée par la tête d'enregistrement-lecture. Cette dernière comprend un objectif du type microscope, solidaire d'une bobine électrodynamique se déplaçant dans le champ magnétique d'un aimant permanent assurant l'asservissement vertical et un miroir galvanométrique dont le pivotement autour d'un axe assure l'asservissement radial. Les sources d'énergie lumineuse, comme il est également connu, comprennent des sources lasers, par exemple des lasers à gaz He-Ne. Ces lasers délivrent un faisceau parallèle polarisé. La section de ce faisceau est très faible. Le faisceau laser doit être élargi et collimaté de façon à recouvrir la pupille d'entrée de l'objectif quelle que soit la position radiale de la tête de lecture; on intercale donc, entre les sources d'énergie lumineuse et la tête d'enregistrement-lecture mobile une optique de type afocal.

Pour la lecture, un faisceau laser $f_1$ parallèle et polarisé, produit par une source laser (non représentée sur la figure 1), est élargi à l'aide d'un système afocal comprenant deux lentilles $L_1$ et $L_2$, dont le grossissement est tel que le faisceau émergeant, également parallèle, recouvre la pupille d'entrée d'un objectif $O_b$ de type microscope. Un miroir de renvoi M est inséré entre ce système afocal et l'objectif $O_b$ de façon à dévier dans une direction parallèle à l'axe OZ les rayons reçus parallèlement à l'axe OX. L'objectif $O_b$ focalise le faisceau de lecture au point 3 sur le disque support d'information 5. Ce disque est animé d'un mouvement de rotation symbolisé par la flèche 6. L'objectif et le miroir sont solidaires d'un équipage mobile constituant la tête d'enregistrement-lecture.

Ce dispositif dissociant les sources lumineuses de la tête d'enregistrement-lecture proprement dite, permet de réduire la masse de l'équipage et d'obtenir ainsi des temps d'accès réduits.

Dans la mesure où il est prévu d'enregistrer des signaux, on peut utiliser le même système afocal pour le faisceau d'enregistrement, lequel ayant été préalablement modulé comme dans les enregistreurs-lecteurs classiques. Afin de différencier les taches de lecture et d'enregistrement sur le disque, on incline très légèrement le faisceau d'enregistrement $f_e$ par rapport au faisceau de lecture $f_1$. Le grandissement transversal est beaucoup plus grand que 1, il s'en suit que le rapport des angles est inférieur à 1. Le décentrement de la tache d'enregistrement sur la pupille d'entrée de l'objectif est donc très limité. On peut également négliger ce déplacement lors d'un déplacement radial de la tête. Il s'en suit que quelque soit la position de l'objectif le long de l'axe optique le faisceau d'écriture est focalisé au foyer de l'objectif tout en assurant une bonne discrimination, en sortie du système afocal, des faisceaux d'enregistrement et de lecture.

Cette figure 1 illustre la marche des rayons lumineux dans l'espace. Le disque 5 est essentiellement parallèle à un plan XOY. L'asservissement vertical se fait selon une direction parallèle à l'axe OZ. L'axe optique du système afocal comprenant deux lentilles $L_1$ et $L_2$, est parallèle à l'axe OX. Le miroir M a une inclinaison variant autour de $\pi_4$ radiants par rapport au plan XOY.

A titre d'exemple non limitatif, des valeurs typiques sont: distances focales de $L_1$ : 8 mm et de $L_2$ : 100 mm; distance focale $O_b$ : 8,25 mm, ouverture numérique O.N : 0,455, diamètre 7.51 mm.

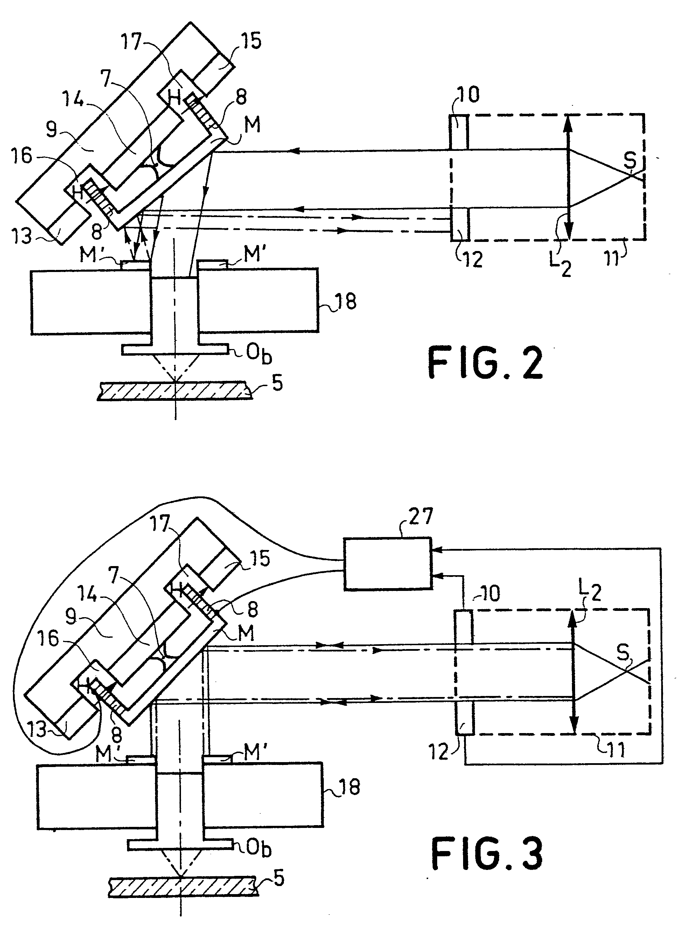

Le miroir (M) du dispositif de la figure 1, utilisé pour l'asservissement radial de la tête optique, peut être réalisé comme illustré sur les figures 2 et 3.

Dans ce cas, si l'on considère l'ensemble formé par l'équipage mobile, le système déflecteur est constitué d'un ensemble d'éléments mobiles reposant sur un ensemble d'éléments fixes par rapport à cet équipage par l'intermédiaire d'un élément élastique 7 à section en X.

Dans cet exemple, le plan réflecteur inclinable est la surface réfléchissante du miroir M qui reçoit le faisceau collimaté provenant de la source lumineuse 11. Sur la face inférieure de ce miroir est collé un cadre supportant le bobinage 8. Le miroir est rectangulaire, et le bobinage est un cadre à section rectangulaire, de dimensions légèrement inférieures à celles du miroir.

L'ensemble des éléments fixes comprend un socle 9, sur lequel sont disposés trois blocs de ferrite 13, 14, 15, de façon à ménager 2 espaces 16 et 17, parallèles à deux côtés du miroir dans le- quels régnent deux champs magnétiques identiques dirigés selon le sens des flèches H.

Le miroir M est relié au bloc de ferrite 14 servant de plan fixe par l'intermédiaire de l'élément prismatique en caoutchouc 7 dont la face latérale supérieure est collée à la face inférieure au miroir M et dont la face latérale inférieure est collée à la face supérieure du bloc de ferrite 14. Les deux côtés opposés de la bobine plongent dans les espaces 16 et 17 où règne le champ magnétique H permanent.

Quand la bobine est alimentée par un courant électrique I, ces deux côtés opposés de la bobine subissent deux forces de même intensité et de sens contraire, ce qui fait pivoter le miroir M autour de l'axe de rotation matérialisé par l'étranglement de l'élément élastique. Cet élément exerçant un couple de rappel élastique sur le miroir, ce dernier s'oriente dans une position qui est fonction de l'intensité du courant électrique I, ce qui rend possible la commande de l'orientation du miroir. Dans une application vidéodisque, un tel système déflecteur est utilisé pour l'asservissement radial du faisceau optique sur la piste gravée sur le disque.

Dans un autre exemple de réalisation, le déflecteur optique peut assurer, en plus de l'asservissement radial, l'asservissement tangentiel du faisceau de lecture. Pour cela, il possède deux directions de rotation orthogonales, ce qui est obtenu très simplement en superposant, sur le premier plan mobile, un deuxième plan mobile supportant le miroir, par l'intermédiaire d'un deuxième élément prismatique élastique, disposé perpendiculairement au premier. Ainsi l'équilibre mobile est dédoublé en deux cadres bobinés portant respectivement le miroir et un plateau intermédiaire magnétiquement conducteur. Les moyens d'articulation comprennent deux éléments élastiques prismatiques croisés; l'un d'entre eux relie le socle de l'équipage mobile à la face inférieure du plateau, l'autre relie la face dorsale du miroir à la face supérieure de ce plateau. Des champs magnétiques fixes et croisés sont créés dans les entrefers où plongent les cadres bobinés, grâce à des pièces pleines en ferrite solidaires de l'équipage mobile.

Dans le dispositif des figures 2 et 3, l'axe de pivotement du miroir galvanométrique M n'est pas confondu avec le centre de gravité de la structure pivotante; aussi lors d'un déplacement rapide de l'équipage mobile, l'accélération imprimée au miroir, fait naître un couple de renversement qui désoriente le miroir. Sur ces figures 2 et 3 le miroir galvanométrique peut tourner autour de l'axe matérialisé par la section étranglée du support à section en X. Le pivotement intempestif dû à l'accélération subie lors d'un déplacement rapide de la tête optique, perturbe l'asservissement radial.

Sur la figure 2, on se trouve dans une position de déséquilibre consécutive à ce déplacement. La partie du faisceau incident renvoyée par le miroir plan M' qui a la forme d'un anneau, puis par le miroir M captée par l'un des détecteurs optique 10 est différente de la partie captée par l'autre détecteur optique 12. Ces détecteurs peuvent être des diodes photoréceptrices, par exemple.

Les signaux détectés par ces éléments sont alors dirigés vers les entrées différentielles d'un amplificateur opérationnel, par exemple. Le signal de sortie ($\varepsilon$) de cet amplificateur est non nul du fait du déséquilibre, et par l'intermédiaire d'un amplificateur de puissance 21 visible sur la figure 4 on va alors créer un courant de commande de la bobine 8. Une contreréaction 22 en courant de cet amplificateur 21 permettant de stabiliser le courant de commande de cette bobine.

Ainsi tout déplacement du faisceau visible sur les détecteurs optiques 10 et 12 conduit à une contre-réaction de la bobine radiale tendant à recentrer le faisceau au milieu de ces détecteurs.

Dans le cas qui est celui illustré à la figure 3 où l'asservissement est effectif, les signaux délivrés par les deux détecteurs 10 et 12 sont alors d'amplitude pratiquement égales et le signal de sortie de l'amplificateur 19 est alors quasi nul. En effet les énergies lumineuses recueillies par ces deux détecteurs sont équivalentes. Sur cette figure 3, on représente les moyens d'asservissement 27; ces moyens permettent de commander en courant la bobine 8 et d'asservir ainsi la position du miroir en fonction des signaux détectés. La figure 4 décrit plus précisément ces moyens d'asservissement. Sur cette figure 4, apparaissent, donc, ces détecteurs optiques 10 et 12, mais également les signaux délivrés par les détecteurs d'écart 23 et 24 qui traduisent un léger décalage $\Delta e$ du point de focalisation par rapport à la piste portée par le substrat; ce décalage étant illustré à la figure 1. En effet la présente invention permet d'enrayer le déséquilibre du miroir de renvoi pendant le déplacement de la tête optique ou toute autre accélération indésirable; c'est à dire d'amplitude supérieure à un seuil tolérable pour un bon fonctionnement. Mais à l'arrêt, ce même miroir permet l'asservissement radial de la tête en tenant compte d'un écart $\Delta e$ du point de focalisation par rapport à la piste protée par le substrat. Ainsi l'amplificateur de puissance tient compte soit de l'écart $\varepsilon$ pendant le déplacement, soit de l'écart $\varepsilon'$ pendant l'arrêt de la tête optique. Ainsi l'interrupteur 26 sur la figure 4 est un circuit commutateur à seuil, il a deux positions de fonctionnement, et il est piloté par le circuit de commande 25.

On a envisagé jusqu'à présent un pivotement du miroir suivant un axe de rotation. Il est tout aussi possible de considérer des rotations suivant deux axes; deux paires de moyens photodétecteurs permettent alors de compenser le déséquilibre du miroir dans deux directions.

**Revendications**

1. Dispositif d'accès à une piste sur un support d'information mobile, enregistrable ou lisible optiquement par un rayonnement focalisé, ledit dispositif comprenant: une source (11) éclairant via un miroir de renvoi (M) la pupille d'entrée d'un objectif ($O_b$) projetant un spot lumineux d'éclairement dudit support (5), un moteur électrodynamique (8) permettant de faire pivoter ledit miroir (M), des premiers moyens photodétecteurs (23, 24) fournissant un signal (ε') détecteur de l'écart de suivi du spot lumineux d'éclairement du support, des moyens d'asservissement ayant une entrée de commande recevant ledit signal (ε') détecteur de l'écart, afin de réaliser le suivi par ledit spot d'une piste portée par ledit support, caractérisé en ce que des deuxièmes moyens photodétecteurs (10, 12) en recueillant au retour la lumière réfléchie par un élément réfléchissant (M') entourant ladite pupille de l'objectif (O_b), fournissent un signal (ε) indicateur du déséquilibre dudit miroir de renvoi (M) pendant un déplacement dudit miroir et dudit objectif, et en ce que lesdits moyens d'asservissement ont une deuxième entrée de commande recevant ledit signal (ε) indicateur, afin d'enrayer ledit déséquilibre.

2. Dispositif selon la revendication 1, caractérisé en ce que la source lumineuse (11) délivre un faisceau de rayons parallèles.

3. Dispositif selon la revendication 1, caractérisé en ce que l'élément réfléchissant (M') est une surface polie.

4. Dispositif selon la revendication 1, caractérisé en ce que la lumière, au retour, est aussi réfléchie par le miroir de renvoi (M).

5. Dispositif selon la revendication 1, caractérisé en ce que les deuxièmes moyens photodétecteurs (10, 12) sont deux éléments situés dans un plan perpendiculaire à la lumière, au retour, reliés aux entrées complémentaires d'un circuit soustracteur.

6. Dispositif selon la revendication 1, caractérisé en ce que les moyens d'asservissement comportent un circuit commutateur à seuil dont les deux entrées sont les entrées de commande, et dont la sortie est le signal de commande de pivotement du miroir de renvoi (M).

7. Dispositif selon l'une quelconque des revendications précédentes, caractérisé en ce qu'il permet des pivotements du miroir (M) selon deux axes, deux paires de deuxièmes moyens photodétecteurs permettant, alors, de compenser des déséquilibres du miroir de renvoi dans deux directions.

8. Dispositif selon l'une quelconque des revendications précédentes, caractérisé en ce que le support d'information (5) est un disque.

## Patentansprüche

1. Vorrichtung zum Zugriff auf eine Spur eines beweglichen Informationsträgers, der zum Schreiben und Lesen mit einem gebündelten Strahl optisch angesteuert wird, mit einer Lichtquelle (11), die über einen Umlenkspiegel (M) die Eingangsöffnung eines Objektivs (O_b) beleuchtet, das einen Lichtpunkt auf den Träger (5) wirft, mit einem elektrodynamischen Motor (8), mit dem der Spiegel (M) umgeklappt werden kann, mit ersten Photodetektormitteln (23, 24), die ein Signal (ε') liefern, das die Folgeabweichung des Lichtpunkts auf dem Träger entdeckt, mit Regelmitteln, deren Steuereingang das die Folgeabweichung entdeckende Signal (ε') zugeführt erhält, um die Verfolgung einer Spur auf dem Träger durch den Lichtpunkt zu realisieren, dadurch gekennzeichnet, dass zweite Photodetektormittel (10, 12), die das von einem die Eingangsöffnung des Objektivs (O_b) umgebenden reflektierenden Element (M') reflektierte Licht auffangen, ein Signal (ε) liefern, das das Ungleichgewicht des Umlenkspiegels (M) während der Bewegung des Spiegels und des Objektivs anzeigt, und dass die Regelmittel einen zweiten Steuereingang aufweisen, dem das Anzeigesignal (ε) zugeführt wird, um das Ungleichgewicht einzugrenzen.

2. Vorrichtung nach Anspruch 1, dadurch gekennzeichnet, dass die Lichtquelle (11) ein Bündel paralleler Strahlen liefert.

3. Vorrichtung nach Anspruch 1, dadurch gekennzeichnet, dass das reflektierende Element (M') eine polierte Oberfläche ist.

4. Vorrichtung nach Anspruch 1, dadurch gekennzeichnet, dass das Licht auf seinem Rückweg auch vom Umlenkspiegel (M) reflektiert wird.

5. Vorrichtung nach Anspruch 1, dadurch gekennzeichnet, dass die zweiten Photodetektormittel (10, 12) zwei Elemente sind, die in einer senkrecht zur Achse des reflektierten Lichts liegenden Ebene angeordnet sind und an die komplementären Eingänge eines Subtraktionsschaltkreises angeschlossen sind.

6. Vorrichtung nach Anspruch 1, dadurch gekennzeichnet, dass die Regelmittel einen Schwellenschaltkreis enthalten, dessen beide Eingänge die Steuereingänge sind und dessen Ausgang das Steuersignal für das Umklappen des Umlenkspiegels (M) liefert.

7. Vorrichtung nach einem beliebigen der vorhergehenden Ansprüche, dadurch gekennzeichnet, dass ein Umklappen des Spiegels (M) um zwei Achsen möglich ist, wobei zwei Paare von zweiten Photodetektormitteln vorhanden sind, um die Ungleichgewichte des Umlenkspiegels in beiden Richtungen zu kompensieren.

8. Vorrichtung nach einem beliebigen der vorhergehenden Ansprüche, dadurch gekennzeichnet, dass der Informationsträger (5) eine Scheibe ist.

## Claims

1. A device for accessing a track on a movable information carrier, on which optical writing and reading is effected by means of a focussed beam, this device comprising: a light source (11) illuminating the inlet iris of a lens (O_b) via a deflecting mirror (M) and projecting a light spot to said carrier (5); an electrodynamic motor (8) conceived to flip over said mirror (M); first photodetector means (23, 24) delivering a signal (ε') which detects the follow deviation of the light spot on the carrier; control means, an input of which receives said follow deviation signal (ε') in order to realize the follow by said spot of a track on said carrier, characterized in that second photodetector means (10, 12) receive the light reflected from a reflecting element (M') which surrounds said lens iris (O_b), and deliver a signal (ε) which indicates the desequilibrium of said deflecting mirror (M) during its movement and of said lens, and that the control means are provided with a second control input receiving said indicating signal (ε) in order to jam said desequilibrium.

2. A device according to claim 1, characterized in that the light source (11) delivers a beam of parallel rays.

3. A device according to claim 1, characterized in that the reflecting element (M') is a polished surface.

4. A device according to claim 1, characterized in that the returning light is further reflected by the deflecting mirror (M).

5. A device according to claim 1, characterized in that the second photodetector means (10, 12) are constituted by two elements which are situated in a common plane perpendicular to the returning light and which are connected to complementary inputs of a subtracting circuit.

6. A device according to claim 1, characterized in that the control means comprise a threshold commutator circuit, the two inputs of which constitute the control input and the output of which delivers the signal for controlling the flip-over of the deflecting mirror (M).

7. A device according to any one of the preceding claims, characterized in that it permits flip-over movements of the mirror (M) according to two axes, two pairs of second photodetector means being then susceptible to compensate for desequilibria of the reflecting mirror according to two directions.

8. A device according to any one of the preceding claims, characterized in that the information carrier (5) is a disc.

FIG.1

FIG.4

FIG. 2

FIG. 3